# EUROPEAN PATENT APPLICATION

(11) **EP 1 821 514 A2**
(43) Date of publication of application: **22.08.2007**
(21) Application number: 06126730.8
(22) Date of filing: 20.12.2006
(51) Int. Cl.: H04N 1/32

(54) **Image scanning device with time authentication requesting function**

(30) Priority: 16.02.2006 JP 2006038807
(71) Applicant: MURATA KIKAI KABUSHIKI KAISHA, Kyoto (JP)
(72) Inventor: Yoshikawa, Hiroyasu, Fushimi-ku Kyoto 612-8686 (JP)
(74) Representative: Ackroyd, Robert

(57) **Abstract**

When executing an e-document scan, an image scanning device MFP1 scans a document and stores scanned data. After resetting a timer, the image scanning device calculates a hash value of the scanned data, and transmits the calculated hash value to a TSA (8 in Figure 1) to request the TSA to issue a timestamp. When receiving a timestamp from the TSA, the image scanning device stores the scanned data and the timestamp in an e-document folder in storage unit 22. When failing to receive a timestamp within a prescribed period of time after requesting the timestamp, the image scanning device adds a comment to the scanned data indicating that the timestamp failed to be received, and prints out on printing unit 17 the scanned data with the comment.

## Description

### BACKGROUND OF THE INVENTION

### 1. Field of the Invention

The present invention relates to an image scanning device with a time authentication requesting function of a digital Multi Function Peripheral (MFP) or the like, which assigns a timestamp to a document image scanned by a scanner and saves the document image assigned with the timestamp.

### 2. Description of the Related Art

Recently, a digital MFP including a copier function, a facsimile function, a printer function, and a scanner function or the like assigns a timestamp to a document image scanned by a scanner, and stores the document image as an e-document. Timestamp technology has been used because digital data can be easily altered compared with a paper document. The technology certifies the time when an electronic document is fixed. The timestamp certifies from when the document has existed, the fact that the document has not been altered by third parties and also the creator himself from the time when the document was created.

When adopting such timestamp technology, first, a device transmits a hash value of an electronic document to a Time Stamping Authority (TSA). The TSA encodes the hash value and information of the correct time clocked by an electronic clock, and returns a timestamp to the device. The device saves the received timestamp along with the electronic document.

When verifying such an e-document, the device decodes the timestamp, and confirms the time information of the timestamp. Then, the device compares the hash value of the electronic document, which has been separately calculated, with a hash value included in the timestamp. Accordingly, verification can be carried out as to whether or not the e-document had been altered. Further, the hash value is a fixed length value generated using a one-way function (hash function) that is irreversible from a given original text. The hash value is also known as a message digest, etc. Since it is extremely difficult to obtain the original text from the hash value and to create different documents having the same hash value, it is possible to confirm whether or not the original text is identical by comparing the hash values.

As described above, when the digital MFP saves the scanned document along with the timestamp as an e-document, the digital MFP requests the TSA to issue a timestamp. Conventionally, when the digital MFP cannot establish a connection with the TSA, the digital MFP stands by for a prescribed period of time and then establishes a connection again with the TSA to request the TSA to issue a timestamp. When requesting the TSA to issue the timestamp, the digital MFP generally requests the TSA to issue the timestamp after confirming an operational status of the TSA. Therefore, in general, the digital MFP can successfully receive a timestamp by establishing a connection with the TSA twice or three times. However, after confirming the operational status of the STA, when the TSA stops due to a machine error or a connection not being established with the TSA due to a failure in a communication line, the digital MFP may not receive the timestamp even by re-establishing a connection with the TSA a number of times.

After requesting the TSA to issue a timestamp, when a user walks away from the digital MFP, if the digital MFP fails to establish a connection with the TSA as described above, the user may misunderstand that a timestamp has been received and an e-document has been created. Moreover, when the digital MFP fails to establish a connection with the TSA while the digital MFP is executing e-document scanning to a plurality of documents, the digital MFP fails to obtain a timestamp and is required to scan the documents again. In this case, however, it is difficult to distinguish which documents need to be scanned again.

### SUMMARY OF THE INVENTION

In order to overcome the problems described above, preferred embodiments of the present invention provide an image scanning device with a time authentication requesting function which can easily recognize that a timestamp failed to be received and which document needs to be scanned again when that image scanning device failed to obtain a timestamp during e-scanning.

According to an aspect of the present invention, an image scanning device with a time authentication requesting function includes an image scanning unit, and a control unit. The image scanning unit scans a document, and generates an image signal. The control unit assigns a timestamp to the image signal generated by the image scanning unit, and saves the image signal with the timestamp in a storage unit. When failing to receive a timestamp within a prescribed period of time after requesting a timestamp to be issued, the control unit notifies an image, which is to be scanned again, and a fact that the timestamp failed to be received.

According to another aspect of the present invention, when failing to receive the timestamp within a prescribed period of time, the control unit adds a comment indicating a failure of reception of the timestamp to the image, which is to be scanned again, and prints out the image with the comment.

According to another aspect of the present invention, when failing to receive the timestamp within a prescribed period of time, the control unit displays on a display unit the image, which is to be scanned again, and the comment indicating a failure of the reception of the timestamp.

According to the present invention, when the image scanning device fails to receive the timestamp within a prescribed period of time, a comment indicating the failure of the reception of the timestamp is added to the image, which is to be scanned again, and the image with the comment is preferably printed out. Alternatively, the display unit may display the image, which is to be scanned again, and the comment indicating the failure of the reception of the timestamp. Therefore, when failing to obtain a timestamp during e-document scanning, it is possible to easily confirm a document, which is to be scanned again.

Other features, elements, processes, steps, characteristics and advantages of the present invention will become more apparent from the following detailed description of preferred embodiments of the present invention with reference to the attached drawings.

### BRIEF DESCRIPTION OF THE DRAWINGS

Fig. 1 shows an example of a network configuration of a system including a digital MFP.

Fig. 2 is a block diagram showing a hardware configuration of the digital MFP.

Fig. 3 shows an example of a detailed structure of a display and operation unit.

Fig. 4 shows a file structure of an e-document storage unit.

Fig. 5 shows an example of data saved in a management file.

Fig. 6 shows an example of an e-document scan execution screen.

Fig. 7 is a flowchart showing processes carried out when e-document scan is executed.

Fig. 8 shows an example of a print-out when failing to receive a timestamp.

### DETAILED DESCRIPTION OF PREFERRED EMBODIMENTS

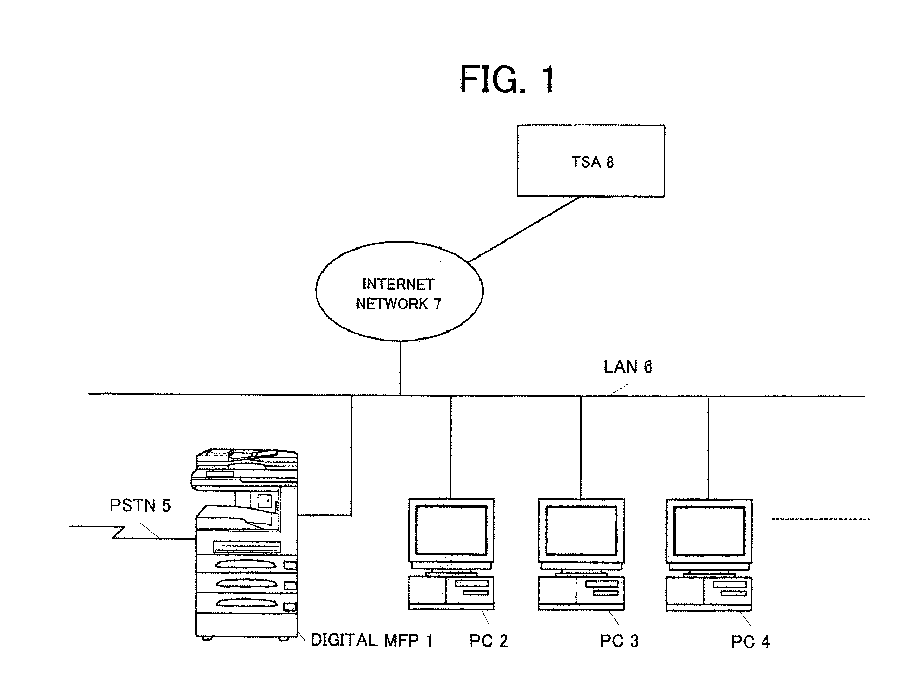

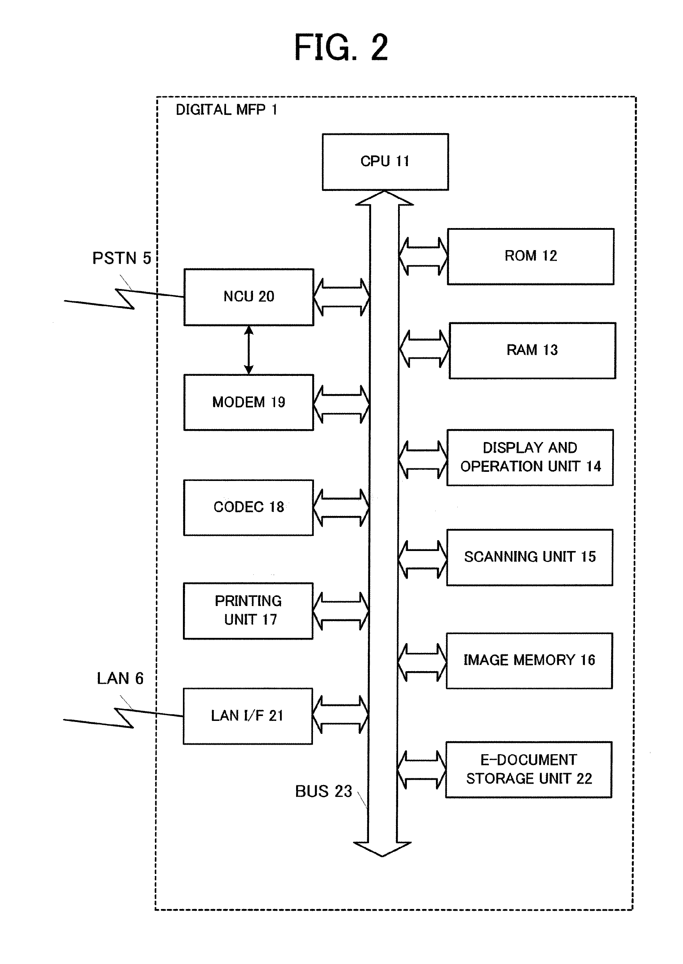

A description will be made of an example of a digital MFP as an image scanning device with a time authentication requesting function according to a preferred embodiment of the present invention. Fig. 1 shows an example of a network configuration of a system including a digital MFP. Fig. 2 is a block diagram illustrating a hardware configuration of the digital MFP.

In Fig. 1, reference numeral 1 denotes a digital MFP, reference numerals 2, 3, 4, etc. respectively denote Personal Computers (PCs), reference numeral 5 denotes a Public Switched Telephone Network (PSTN), 6 denotes a Local Area Network, 7 denotes an Internet network, and 8 denotes a TSA. The digital MFP 1 includes functions of a copy mode, a printer mode, and a facsimile mode, and also includes a mail transmitting function. The digital MFP 1 is connected to the PSTN 5 and the LAN 6. The PCs 2, 3, 4, etc. as terminal devices are connected to the LAN 6. The LAN 6 is also connected to the Internet network 7. The digital MFP 1 can transmit and receive mail via the Internet network 7. The TSA 8 is a time stamping authority. When the TSA 8 receives a hash value of scanned data from the digital MFP 1 via the Internet network 7, the TSA 8 encodes the received hash value along with information of accurate time clocked by an electronic clock. Then, the TSA 8 returns the encoded hash value as a timestamp.

As shown in Fig. 2, the digital MFP 1 includes a Central Processing Unit (CPU) 11, a Read Only Memory (ROM) 12, a Random Access Memory (RAM) 13, a display and operation unit 14, a scanning unit 15, an image memory 16, a printing unit 17, a Coder-Decoder (CODEC) 18, a Modulator-Demodulator (MODEM) 19, a Network Control Unit (NCU) 20, a LAN interface (I/F) 21, and an e-document storage unit 22. Each of the units 11 to 22 is connected via a bus 23.

The CPU 11 controls each of hardware components of the digital MFP 1 via the bus 23. The CPU 11 executes various programs stored in the ROM 12. The ROM 12 previously stores various programs and operation messages or the like necessary for an operation of the digital MFP 1. The RAM 13 is formed of a Static RAM (SRAM) or the like. The RAM 13 stores temporary data that generates when a program is executed.

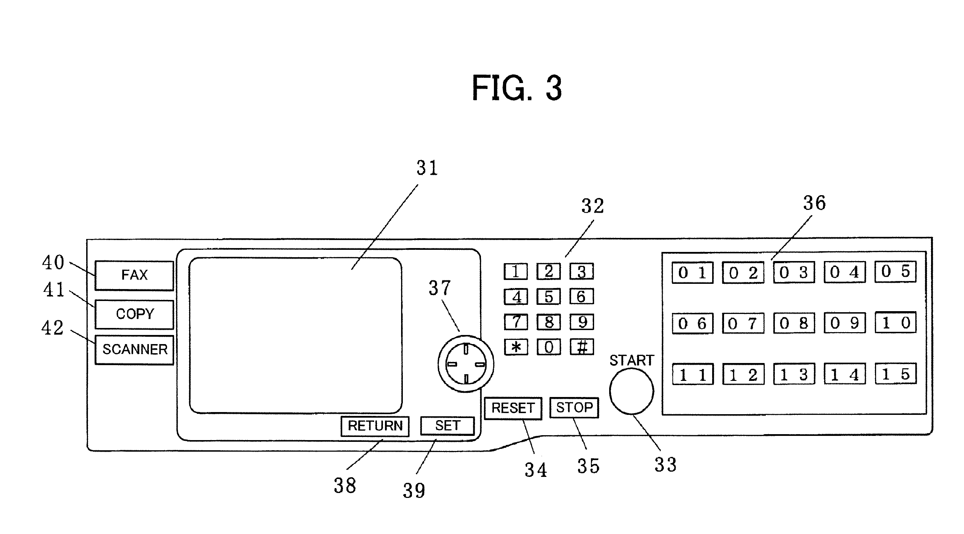

The display and operation unit 14 includes a display unit, which displays an operation status of the digital MFP 1 and displays an operation screen for various functions, and a plurality of keys for operating the digital MFP 1. As shown in Fig. 3, the display and operation unit 14 includes a Liquid Crystal Display (LCD) display unit 31 as the display unit and a plurality of operation keys. Touch-screen switches are provided in the LCD display unit 31. By pressing an item displayed on the LCD display unit 31, it becomes possible to select a corresponding item or to execute a function. As the operation keys, the display and operation unit 14 includes a ten-key numeric pad 32, a start key 33, a reset key 34, a stop key 35, a plurality of one-touch dial keys 36, a cross key 37, a return key 38, a set key 39, a FAX switching key 40, a copy switching key 41, and a scanner switching key 42 or the like. Further, the LCD display unit 31 may substitute for some or all of these operation keys.

The scanning unit 15 includes an original placing table for an Auto Document Feeder (ADF) and/or a Flat Bed Scanner (FBS) or the like. The scanning unit 15 scans an original by a scanner using a Charge-Coupled Device (CCD) or the like, and outputs dot image data. The image memory 16 includes a Dynamic RAM (DRAM) or the like. The image memory 16 stores image data to be transmitted, received image data, or image data scanned by the scanning unit 15. The printing unit 17 includes an electrophotographic printer device. The printing unit 17 prints out received data, copied original data, or print data transmitted from the remote PCs 2, 3, 4, etc.

The CODEC 18 encodes and decodes according to a prescribed protocol. For transmitting image data of a scanned original, the CODEC 18 encodes the image data by the Modified Huffman (MH), the Modified Read (MR) or the Modified MR (MMR) scheme. The CODEC 18 decodes image data received from a remote terminal. The CODEC 18 also encodes and decodes according to the Tagged Image File Format (TIFF) or the like, which is an image format generally used as a file attachable to electronic mail.

The MODEM 19 is connected to the bus 23, and includes functions as a faxmodem capable of carrying out facsimile communication. The MODEM 19 is also connected to the NCU 20, which is also connected to the bus 23. The NCU 20 is hardware for closing and releasing an analog communication line. The NCU 20 connects the MODEM 19 to the PSTN 5 according to necessity. The LAN I/F 21 is connected to the LAN 6. The LAN I/F 21 receives a signal from the Internet network 7, and transmits a signal and/or data to the LAN 6. The LAN I/F 21 executes an interface processing such as a signal conversion and a protocol conversion.

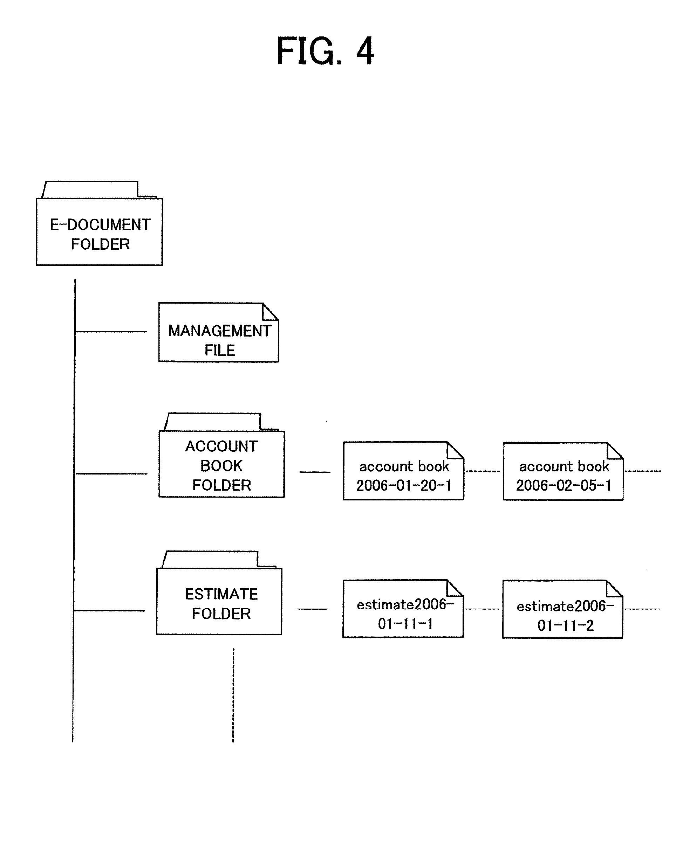

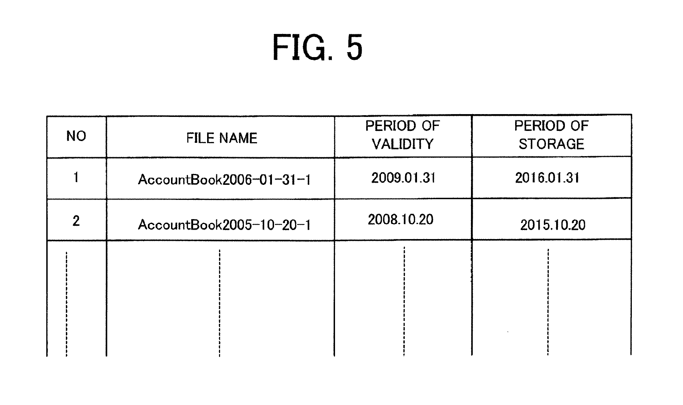

The e-document storage unit 22 is a storage unit which stores e-documents per document type. As shown in Fig. 4, the e-document storage unit 22 includes a management file of e-documents, and folders for each of following documents: account book, estimate, memorandum, purchase order, etc. Each document folder stores a scanned document assigned with a file name and a timestamp. Further, the file name includes a combination of a character string identifying a document name, a date, and a consecutive number. As shown in Fig. 5, the management file stores a file name, a period of validity of the timestamp, and a period of storage of the data for each e-document.

When carrying out facsimile transmission, the scanning unit 15 scans image data of an original, and the CODEC 18 compresses the scanned image data. Then, the image data is stored in the image memory 16. The compressed image data is retrieved from the image memory 16, and the MODEM 19 modulates the retrieved image data. Then, the image data is transmitted from the NCU 20 to a destination via the PSTN 5. When receiving facsimile, the MODEM 19 demodulates the received image data, and the image data is stored in the image memory 16. Then, the CODEC 18 decodes the image data, and the printing unit 17 prints out the image data.

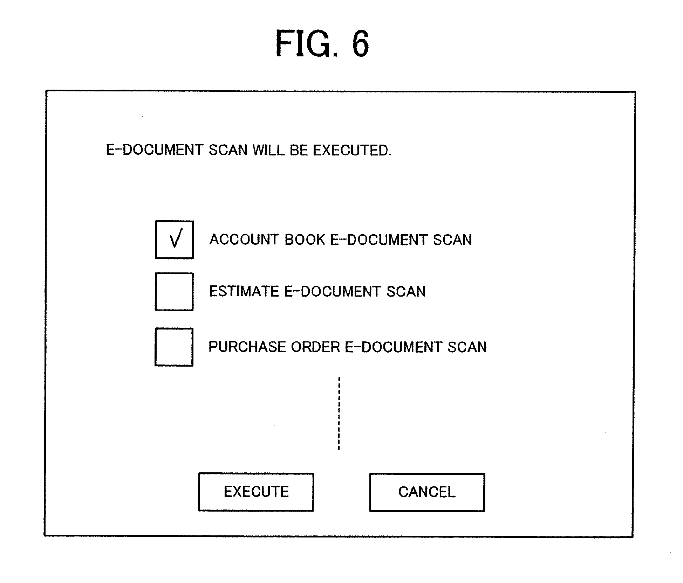

The digital MFP 1 can scan a document and store the scanned document as an e-document as described above. In the following, processes when carrying out an e-document scan will be described. When the user instructs the e-document scan by operating the LCD display unit 31 of the display and operation unit 14, the LCD display unit 31 of the display and operation unit 14 displays an e-document scan execution screen shown in Fig. 6. This screen displays a selection screen for selecting a document type to be executed with the e-document scan, such as account book e-document scan, estimate e-document scan, and purchase order e-document scan. After either one of the e-document scan is pressed and selected, by pressing an "EXECUTE" button, the digital MFP 1 executes the e-document scan.

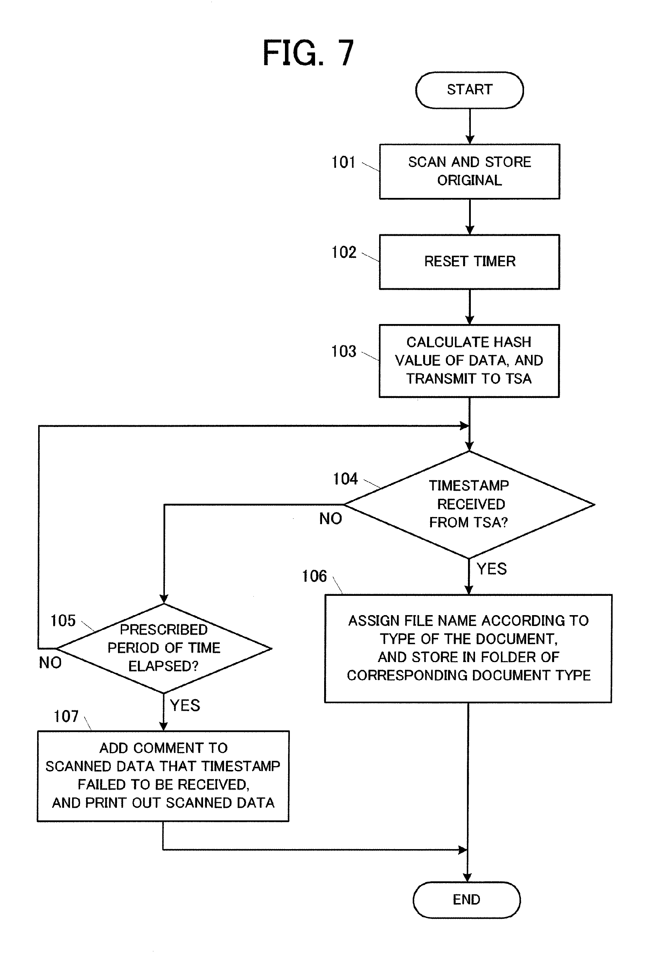

Fig. 7 is a flowchart showing operations carried out by the CPU 11 when the e-document scan is executed. After either one of the e-document scan is selected, when the "EXECUTE" button is pressed, the CPU 11 starts an e-document scan program illustrated in the flowchart of Fig. 7. After scanning an original by the scanning unit 15, the scanned data is compressed by the CODEC 18 and stored in the image memory 16 (step 101).

Next, the CPU 11 resets a timer (not shown) (step 102) . The CPU 11 calculates a hash value of the data stored in the image memory 16, and transmits the calculated hash value data to the TSA 8 via the LAN I/F 21, the LAN 6 and the Internet network 7 to request the TSA 8 to issue a timestamp (step 103).

After transmitting the hash value data to the TSA 8, the CPU 11 determines whether or not a timestamp has been received from the TSA 8 (step 104). When the CPU 11 determines that a timestamp has not been received (step 104: NO), the CPU 11 determines whether or not a prescribed period of time has elapsed since the timer reset (step 105). When the CPU 11 determines that a prescribed period of time has not elapsed since the timer reset (step 105: NO), the CPU 11 returns to step 104 to determine again whether or not a timestamp has been received from the TSA 8.

When the CPU 11 determines that a timestamp has been received from the TSA 8 (step 104: YES), the CPU 11 creates a file name according to the document type. For example, when the account book e-document scan has been selected in the e-document scan execution screen shown in Fig. 6, the CPU 11 creates a file name including "account book", "date", and "consecutive number". The CPU 11 stores the scanned data and the timestamp in an account book folder of the e-document storage unit 22 under the created file name. In addition, the file name, a period of validity of the timestamp, and a period of storage of the e-document are stored in the management file (step 106). Further, a term of storage of the e-document can be designated for each document type, for example, ten years for account books, or five years for purchase orders. Therefore, the period of storage can be automatically decided according to a creation date of the e-document and the term of storage for the type of the e-document.

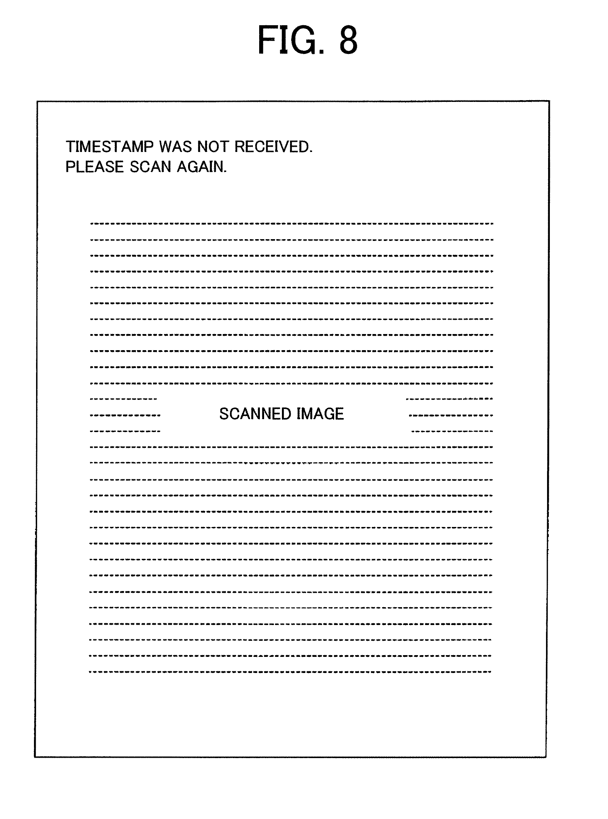

Meanwhile, the CPU 11 determines that a prescribed period has elapsed since the timer reset (Step 105: YES), the CPU 11 adds a comment to the scanned data indicating that the timestamp failed to be received, and the printing unit 17 prints out the scanned data (step 107). Accordingly, as shown in Fig. 8, for example, a comment "Timestamp was not received. Please scan again." is added to an upper portion of a scanned document, and the scanned document is printed out. Therefore, even when the user has executed the e-document scan to a plurality of documents, the user can easily distinguish for which document a timestamp has not been obtained. Further, when the scanned document includes a plurality of sheets of originals, a comment indicating the failure of the reception of the timestamp may be added to each page of the plurality of sheets of originals. Alternatively, the comment indicating the failure of the reception of the timestamp may be added to only a first page of the plurality of sheets of originals.

In the above-described preferred embodiment, a comment indicating the failure of the reception of the timestamp is printed out along with the scanned data. However, a comment indicating the failure of the reception of the timestamp and a portion of the scanned data may be displayed on the LCD display unit 31 of the display and operation unit 14 to notify the user a document that failed to receive the timestamp. In the above-described preferred embodiment, a comment indicating the failure of the reception of the timestamp is added to an upper portion of a scanned document, and the scanned document is printed out. As another example, a comment indicating the failure of the reception of the timestamp may be printed out in a lower portion or a reverse side of the scanned document.

In the above-described preferred embodiment, the user selected the account book e-document scan or the estimate e-document scan or the like from the display screen of the display and operation unit. As another example, a button may be provided for executing each of e-document scans, and by operating the button, the user may instruct the e-document scan of each document. Furthermore, in the above-described preferred embodiment, the file name includes a character string that can identify a document name, a date, and a consecutive number. An e-document is automatically stored in a document file according to a type of the document. As another example, the user may designate where to save the e-document, or manually input and assign any document name.

While the present invention has been described with respect to preferred embodiments thereof, it will be apparent to those skilled in the art that the disclosed invention may be modified in numerous ways and may assume many embodiments other than those specifically set out and described above. Accordingly, the appended claims are intended to cover all modifications of the present invention that fall within the true scope of the present invention.

## Claims

1. An image scanning device with a time authentication requesting function, comprising:
an image scanning means for scanning a document and generating an image signal; and
a control means for controlling to assign a timestamp to the image signal generated by the image scanning means and to store the image signal with the timestamp in a storing means;
wherein, when failing to receive the timestamp within a prescribed period of time after requesting the timestamp to be issued, the control means notifies an image, which is to be scanned again, and a comment indicating a failure in reception of the timestamp.

2. An image scanning device according to claim 1, wherein, when failing to receive the timestamp within the prescribed period of time, the control means adds the comment indicating the failure in the reception of the timestamp to the image, which is to be scanned again, and prints out the image with the comment.

3. An image scanning device according to claim 1, wherein, when failing to receive the timestamp within the prescribed period of time, the control means displays the image, which is to be scanned again, and the comment indicating the failure in the reception of the timestamp on a display means.
